# EUROPÄISCHE PATENTSCHRIFT

(11) **EP 1 596 100 B1**
(45) Veröffentlichungstag und Bekanntmachung des Hinweises auf die Patenterteilung: **23.01.2008**
(21) Anmeldenummer: 05009655.1
(22) Anmeldetag: 03.05.2005
(51) Int. Cl.: F16H 25/22

(54) **Kugelgewindetrieb**
Ball screw drive
Entraînement à vis à billes

(30) Priorität: 12.05.2004 DE 102004023354
(43) Veröffentlichungstag der Anmeldung: 16.11.2005
(73) Patentinhaber: Schaeffler KG, 91074 Herzogenaurach (DE)
(72) Erfinder: Hartig, Günter, 91074 Herzogenaurach (DE); Osterlänger, Jürgen, 91448 Emskirchen (DE); Adler, Dieter, 91074 Herzogenaurach (DE); Kraus, Manfred, Dr., 91074 Herzogenaurach (DE); Mayer, Ralf, 91074 Herzogenaurach (DE); Wagner, Jörg, 91094 Oberreichenbach (DE); Münck, Horst, 91074 Herzogenaurach (DE)

(56) Entgegenhaltungen:
- EP-A- 0 814 012
- DE-A1- 10 056 275
- US-A- 2 159 225
- US-A- 4 593 780
- US-A1- 2003 145 670
- US-A1- 2003 188 918
- PATENT ABSTRACTS OF JAPAN Bd. 008, Nr. 203 (M-326), 18. September 1984 (1984-09-18) -& JP 59 093557 A (HIROSHI TERAMACHI), 30. Mai 1984 (1984-05-30)
- PATENT ABSTRACTS OF JAPAN Bd. 2003, Nr. 03, 5. Mai 2003 (2003-05-05) -& JP 2002 340129 A (NSK LTD), 27. November 2002 (2002-11-27)
- PATENT ABSTRACTS OF JAPAN Bd. 018, Nr. 438 (M-1656), 16. August 1994 (1994-08-16) -& JP 06 135339 A (KOYO SEIKO CO LTD), 17. Mai 1994 (1994-05-17)
- PATENT ABSTRACTS OF JAPAN Bd. 1995, Nr. 07, 31. August 1995 (1995-08-31) -& JP 07 103306 A (GAKUJO NAKAMURA), 18. April 1995 (1995-04-18)

## Beschreibung

Die vorliegende Erfindung betrifft einen Kugelgewindetrieb, der beispielsweise als Komponente einer elektromechanischen Lenkhilfe in Lenkeinrichtungen von Kraftfahrzeugen zum Einsatz kommt.

Aus US 2003/0 188 918 A1 ist ein Kugelgewindetrieb mit allen Merkmalen des Oberbegriffes des unabhängigen Anspruchs 1 bekannt.

Aus EP 0 814 012 B1 beispielsweise ist eine elektrische Hilfskraftlenkvorrichtung bekannt geworden, bei der ein Kugelgewindetrieb vorgesehen ist. Eine Zahnstange ist in axialer Verlängerung mit einer Spindel versehen, auf der eine Spindelmutter angeordnet ist. Zwischen der Spindelmutter und der Spindel wälzen Kugeln in Kugelrillen ab, die sowohl am Innenumfang der Spindelmutter als auch am Außenumfang der Spindel ausgebildet sind. Diese Kugelrillen begrenzen einen Lastkanal, in dem die Kugeln unter Last abwälzen können. Für einen endlosen Umlauf der Kugeln umfasst die Spindelmutter eine so genannte Außenumlenkung, die die beiden Enden des Lastkanals endlos miteinander verbindet. Die Außenumlenkung windet sich etwa über 180° um den Außenumfang der Spindelmutter herum. Am Ende des in der Regel mehrere Windungen umfassenden Lastkanals werden die Kugeln in die Außenumlenkung umgelenkt. Innerhalb der Umlenkung bewegen sich die Kugeln im lastfreien Rücklaufkanal. Sie werden von dort zu dem Anfang des Lastkanals umgelenkt und erneut entlang der Kugelrillen abgewälzt. Die Spindelmutter ist an ihren axialen Enden radial über ein Rillenkugellager gelagert. Ferner ist auf der Spindelmutter drehfest ein Zahnrad angeordnet, das mit einem Antriebsritzel eines Elektromotors kämmt. Das Zahnrad ist mit axialem Abstand zu der Außenumlenkung angeordnet. Diese Anordnung beansprucht einen erheblichen Bauraumbedarf in axialer Richtung.

Aufgabe der vorliegenden Erfindung ist es, einen Kugelgewindetrieb nach den Merkmalen des Oberbegriffs des Anspruchs 1 anzugeben, der eine axial kürzere Bauweise zulässt. Erfindungsgemäß wird diese Aufgabe durch die zusätzlichen Merkmale des kennzeichnenden Teils des Anspruchs 1 gelöst. In vorteilhafter Weise wird der axiale Platzbedarf des Zahnrades zusätzlich zur Unterbringung der Außenumlenkung genutzt. Auf diese Art und Weise kann der axiale Bauraumbedarf erheblich reduziert werden. Ferner bietet die Umhüllung der Außenumlenkung Schutz vor unerwünschter Einwirkung auf die Außenumlenkung. Insbesondere im Kraftfahrzeugbereich werden kleinbauende Elemente benötigt.

Gemäß der Erfindung umfasst ein das Antriebsrad bildendes Zahnriemenrad einen mit einer Außenverzahnung versehenen Zahnkranz auf, der einen innerhalb des Zahnriemenrades ausgebildeten Ringraum begrenzt, in dem die Außenumlenkung angeordnet ist. Der Ringraum kann in Umfangsrichtung unterbrochen sein, ist aber vorzugsweise in Umfangsrichtung durchgängig ausgebildet. Derartige Zahnriemenräder lassen sich beispielsweise als Druckgussteile, Spritzgussteile oder auch als Sinterteile ausbilden. Die Außenumlenkung kann dabei als etwa rohrförmiges Element ausgebildet sein, das in diesen Ringraum untergebracht ist.

Das Zahnriemenrad kann vorzugsweise mit einer Nabe drehfest auf der Spindelmutter angeordnet sein, wobei der Zahnkranz über einen vorzugsweise an einem axialen Ende des Zahnriemenrades angeordneten Radialsteg fest mit der Nabe verbunden ist. Durch den im Bereich eines axialen Endes angeordneten Radialsteg ist ein ausreichender Ringraum zur Verfügung gestellt, in dem die Außenumlenkung untergebracht werden kann.

Die Außenumlenkung umfasst in bekannter Weise einen Rücklaufkanal für die Kugeln, wobei der Rücklaufkanal mit seinen beiden Enden an die beiden Enden des Lastkanals angeschlossen ist und wobei erfindungsgemäß die Außenumlenkung mehrteilig ausgeführt ist mit einer Teilungsebene entlang und innerhalb des Rücklaufkanals.

Der Rücklaufkanal weist einen etwa kreisförmigen Querschnitt auf, wobei die Umlenkteile jeweils mit einer diesen Rücklaufkanal begrenzenden Kugelrille versehen sind. Die Teilung entlang und innerhalb des Rücklaufkanals ermöglicht eine einfache Ausbildung der an der Außenumlenkung vorzusehenden Kugelrillen. Es können beispielsweise einfach ausgebildete Spritzwerkzeuge zum Einsatz kommen, bei denen eine derartige Kugelrille bereits vorgesehen ist. Die Außenumlenkung kann auf diese Art und Weise günstig aus Kunststoff im Spritzverfahren hergestellt werden.

In besonders günstiger Weise kann eines der Umlenkteile der mehrteiligen Außenumlenkung einstückig mit dem Antriebsrad ausgebildet sein. Bei dieser erfindungsgemäßen Weiterbildung kann die Teileanzahl reduziert werden. Ein derartiges Zahnrad oder Zahnriemenrad ist vorzugsweise aus Kunststoff im Spritzverfahren hergestellt.

Die Außenumlenkung kann alternativ als vom Zahnrad getrenntes Umlenkelement vorzugsweise aus Kunststoff ausgeführt sein, wobei die Umlenkteile des Umlenkelementes form-, oder kraft- oder stoffschlüssig miteinander verbunden sind.

Zur einwandfreien Positionierung des Umlenkelementes in dem Ringraum kann es zweckmäßig sein, das Umlenkelement in eine Vergussmasse einzubetten. Der Ringraum wird mit der Vergussmasse gefüllt, so daß das Umlenkelement von der Vergussmasse mehr oder minder eingehüllt ist. Nach Aushärten der Vergussmasse ist eine einwandfreie Positionierung des Umlenkelementes gegenüber der Spindelmutter gewährleistet. Die Vergussmasse kann beispielsweise ein Kunststoff sein. Die Vergussmasse kann so gewählt werden, dass eine anzustrebende Geräuschdämpfung verbessert wird. Wenn beispielsweise das Zahnrad oder das Zahnriemenrad aus Stahl gebildet ist, trägt eine entsprechend ausgewählte Vergussmasse dazu bei, Schwingungsübertragungen zu dämpfen. Anstelle einer Vergussmasse kann auch ein Schaum mit dauerelastischen Eigenschaften nach dessen Aushärtung verwendet werden.

Gemäß der Erfindung wird die Zahl der Teile reduziert, da die Spindelmutter an ihrem Außenumfang mit einer einstückig angeformten Kugelrille versehen ist, um die Spindelmutter mittels eines Radialkugellagers radial zu lagern. Auf einen separaten Innenring des Radialkugellagers wird dann verzichtet.

Nachstehend wird die Erfindung anhand von 2 in insgesamt 6 Figuren abgebildeten Ausführungsbeispielen näher erläutert. Es zeigen:
- Figur 1: einen erfindungsgemäßen Kugelgewindetrieb in perspektivischer Darstellung,
- Figur 2: den erfindungsgemäßen Kugelgewindetrieb aus Figur 1 im Längsschnitt,
- Figuren 3-5: ein Zahnrad mit Außenumlenkung und Kugeln des erfindungsgemäßen Kugelgewindetriebes aus Figur 1 in unterschiedlichen Darstellungen und
- Figur 6: einen Längsschnitt durch einen weiteren erfindungsgemäßen Kugelgewindetrieb..

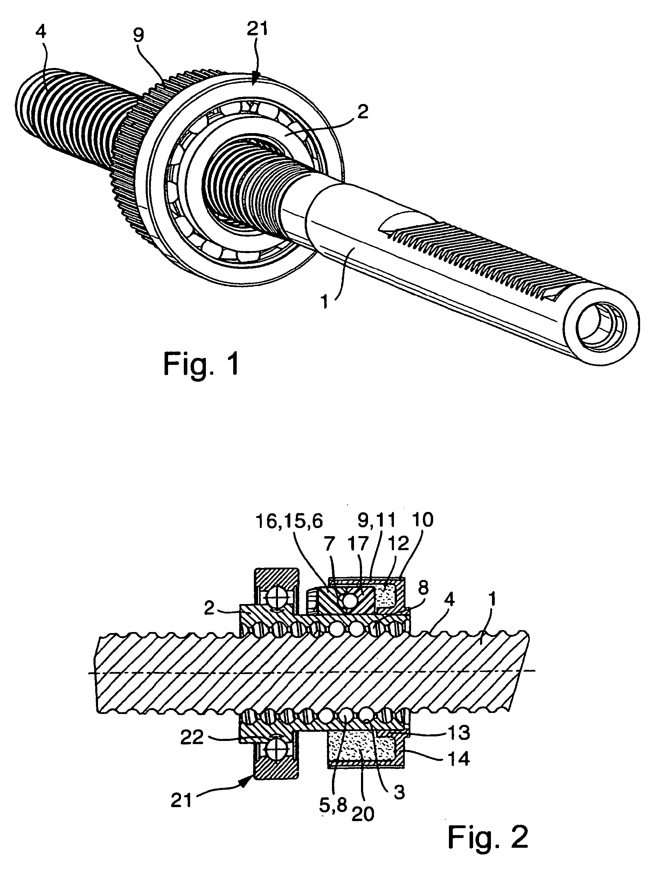

Der in den Figuren 1 - 5 abgebildete erfindungsgemäße Kugelgewindetrieb umfasst eine auf einer Spindel 1 aufgesetzte Spindelmutter 2, an deren Innenumfang eine entlang einer Schraubenlinie angeordnete Kugelrille 3 ausgebildet ist. Die Spindel 1 weist an ihrem Außenumfang eine entlang einer Schraubenlinie ausgebildete Kugelrille 4 auf. Kugeln 5 sind zwischen der Spindelmutter 2 und der Spindel 1 angeordnet und wälzen an den Kugelrillen 3 und 4 ab, wenn die Spindelmutter 2 relativ zur Spindel 1 gedreht wird. Die Spindelmutter 2 umfaßt ferner eine Außenumlenkung 6, um die Kugeln von dem einen Ende zu dem anderen Ende der Kugelrille 3 umzulenken.

Innerhalb der Außenumlenkung 6 ist ein Rücklaufkanal 7 für die Kugeln 5 ausgebildet. Zwischen der Spindelmutter 2 und der Spindel 1 ist ein Lastkanal 8 für die Kugeln 5 ausgebildet, wobei der Lastkanal 8 von den Kugelrillen 3, 4 begrenzt ist. Der Rücklaufkanal 7 verbindet die beiden Enden des Lastkanals 8 endlos miteinander, wobei die beiden Enden des Rücklaufkanals 7 jeweils an ein Ende des Lastkanals 8 angeschlossen sind.

Auf der Spindelmutter 2 ist ein Zahnriemenrad 9 drehfest angeordnet. Das Zahnriemenrad 9 ist von einem hier nicht dargestellten Zahnriemen umschlungen, wobei dieser Zahnriemen ferner ein Antriebsritzel eines Elektromotors umschlingt, der hier ebenfalls nicht abgebildet ist.

Der Figur 2 ist zu entnehmen, dass die Außenumlenkung 6 im Wesentlichen axial innerhalb der axialen Erstreckung des Zahnriemenrades 9 angeordnet ist. Zu diesem Zweck weist das Zahnriemenrad 9 einen mit einer Außenverzahnung 10 versehenen Zahnkranz 11 auf, der einen innerhalb des Zahnriemenrades 9 ausgebildeten Ringraum 12 begrenzt. Der Ringraum 12 ist andererseits durch den Außenumfang der Spindelmutter 2 begrenzt. In den Ringraum 12 ist im Wesentlichen die Außenumlenkung 6 untergebracht.

Das Zahnriemenrad 9 ist ferner mit einer Nabe 13 versehen, die drehfest auf dem Außenumfang der Spindelmutter 2 befestigt ist. Der Zahnkranz 11 ist über einen Radialsteg 14 einstückig mit der Nabe 13 verbunden, wobei der Radialsteg 14 an einem axialen Ende des Zahnriemenrades 9 angeordnet ist. Durch die einseitige Anordnung des Radialsteges 14 ist ein großer Ringraum 12 gewährleistet.

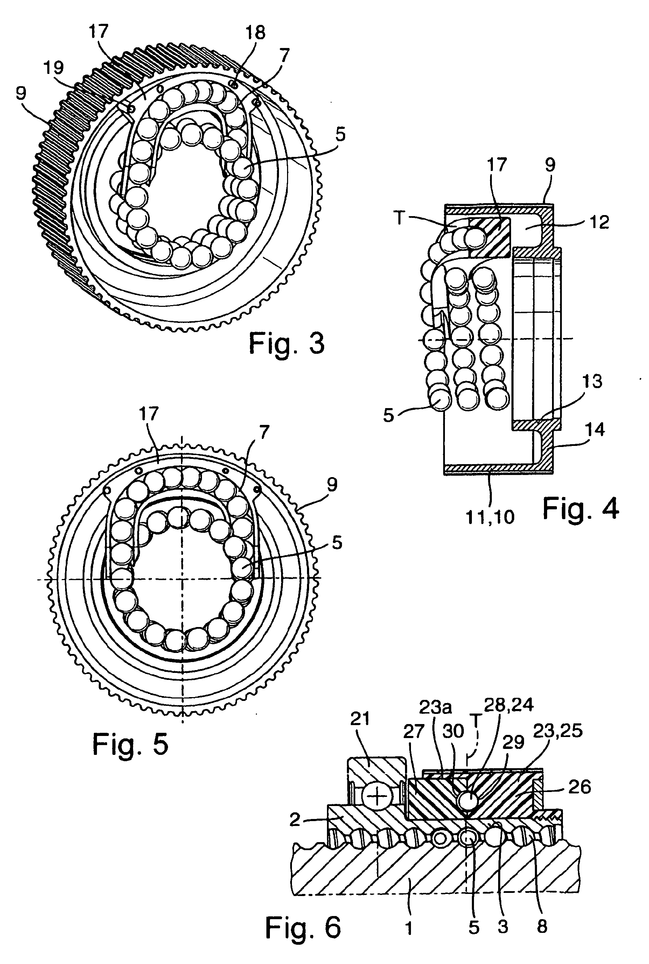

Die Außenumlenkung 6 ist vorliegend mehrteilig ausgeführt, wobei eine Teilungsebene T entlang und innerhalb des Rücklaufkanals 7 angeordnet ist. In den Figuren 3 - 5 ist die Teilungsebene T dargestellt. Figur 2 zeigt die zweiteilig ausgeführte Außenumlenkung 6. Diese Außenumlenkung 6 ist als vom Zahnriemenrad 9 getrenntes Umlenkelement 15 ausgebildet und vorzugsweise aus Kunststoff im Spritzverfahren hergestellt. Die beiden Umlenkteile 16, 17 sind vorliegend form- und kraftschlüssig miteinander verbunden.

In den Figuren 3 - 5 ist lediglich das Umlenkteil 17 abgebildet. Dieses Umlenkteil 17 ist mit axial vorspringenden Stiften 18 und mit Ausnehmungen 19 versehen. Das andere Umlenkteil 16 ist ebenfalls mit derartigen Stiften und Ausnehmungen versehen, wobei die Stifte 18 der beiden Umlenkteile 16, 17 form-und kraftschlüssig in die Ausnehmungen 19 des jeweils anderen Umlenkteils 16, 17 eingreifen.

Dadurch, dass die Teilungsebene T entlang und innerhalb des Rücklaufkanals 7 angeordnet ist, können einfache Spritzwerkzeuge bereitgestellt werden, um Kugelrillen an den Umlenkteilen 16, 17 zu formen, die gemeinsam den Rücklaufkanal 7 begrenzen.

Bei dem Ausführungsbeispiel gemäß Figur 2 ist das Umlenkelement 15 in eine Vergussmasse 20 eingebettet, mit der der Ringraum 12 ausgefüllt ist. Diese Vergussmasse härtet aus, so dass das Umlenkelement 15 einwandfrei innerhalb des Zahnriemenrades 9 und zur Spindelmutter 2 positioniert ist.

Die Spindelmutter 2 ist über ein Radialkugellager 21 radial gelagert, wobei eine Kugelrille 22 dieses Radialkugellagers 21 am Außenumfang der Spindelmutter 2 einstückig angeformt ist.

Während bei diesem Ausführungsbeispiel das Umlenkelement 15 getrennt vom Zahnriemenrad 9 hergestellt ist, sind vorteilhafte Weiterbildungen möglich, indem zumindest eines der Umlenkteile einstückig mit dem Zahnriemenrad ausgebildet ist. Eine derartige Variante ist in Figur 6 abgebildet.

Bei diesem erfindungsgemäßen Kugelgewindetrieb ist auf der Spindelmutter 2 ein Zahnriemenrad 23 angeordnet, innerhalb dessen axialer Erstreckung in einem Ringraum 23a eine Außenumlenkung 24 für die Kugeln 5 angeordnet ist. Der wesentliche Unterschied zu dem oben beschriebenen Ausführungsbeispiel besteht darin, dass die Außenumlenkung 24 durch ein mehrteiliges Umlenkelement 25 gebildet ist, wobei ein Umlenkteil 26 einstückig mit dem Zahnriemenrad 23 ausgebildet ist. Das andere Umlenkteil 27 kann getrennt hergestellt sein. Die Teilungsebene T ist hier ebenfalls entlang und innerhalb des Rücklaufkanals 28 ausgebildet, wobei die beiden Umlenkteile 26, 27 mit ihren einstückig angeformten Kugelrillen 29, 30 den Rücklaufkanal 28 begrenzen. Bei diesem Ausführungsbeispiel ist die Teileanzahl reduziert.

### Bezugszeichen

- 1: Spindel
- 2: Spindelmutter
- 3: Kugelrille
- 4: Kugelrille
- 5: Kugeln
- 6: Außenumlenkung
- 7: Rücklaufkanal
- 8: Lastkanal
- 9: Zahnriemenrad
- 10: Außenverzahnung
- 11: Zahnkranz
- 12: Ringraum
- 13: Nabe
- 14: Radialsteg
- 15: Umlenkelement
- 16: Umlenkteil
- 17: Umlenkteil
- 18: Stift
- 19: Ausnehmung
- 20: Vergussmasse
- 21: Radialrillenkugellager
- 22: Kugelrille
- 23: Zahnriemenrad
- 23a: Ringraum
- 24: Außenumlenkung
- 25: Umlenkelement
- 26: Umlenkteil
- 27: Umlenkteil
- 28: Rücklaufkanal
- 29: Kugelrille
- 30: Kugelrille

## Patentansprüche

1. Kugelgewindetrieb, mit einer auf einer Spindel (1) aufsetzbaren Spindelmutter (2), an deren Innenumfang eine entlang einer Schraubenlinie ausgebildete Kugelrille (3) einen Lastkanal (8) für Kugeln (5) begrenzt, wobei eine außerhalb der Spindelmutter (2) angeordnete Außenumlenkung (6, 24) vorgesehen ist, die die beiden Enden des Lastkanals (8) endlos miteinander verbindet, um die Kugeln (5) von dem einen Ende zu dem anderen Ende des Lastkanals (8) umzulenken, und wobei ein Antriebsrad auf der Spindelmutter (2) zum Antreiben der Spindelmutter (2) angeordnet ist, wobei die Spindelmutter (2) über ein Radialkugellager (21) radial gelagert ist und wobei das Antriebsrad durch ein Zahnriemenrad (9, 23) gebildet ist, das einen mit einer Außenverzahnung (10) versehenen Zahnkranz (11) aufweist, **dadurch gekennzeichnet, dass** die Außenumlenkung (6, 24) zumindest im wesentlichen innerhalb der axialen Erstreckung des Zahnriemenrades (9, 23) angeordnet ist, dessen Zahnkranz (11) einen innerhalb des Zahnriemenrades (9) ausgebildeten Ringraum (12, 23a) begrenzt, in dem die Außenumlenkung (6, 24) angeordnet ist, wobei die Spindelmutter (2) mit einer einstückig angeformten Kugelrille (22) des Radialkugellagers (21) versehen ist.

2. Kugelgewindetrieb nach Anspruch 1, bei dem das Zahnriemenrad (9, 23) eine auf der Spindelmutter (2) drehfest angeordnete Nabe (13) aufweist, wobei der Zahnkranz (11) über einen vorzugsweise an einem axialen Ende des Zahnrades angeordneten Radialsteg (14) fest mit der Nabe (13) verbunden ist.

3. Kugelgewindetrieb nach Anspruch 1, bei dem die Außenumlenkung (6, 24) einen Rücklaufkanal (7, 28) für die Kugeln (5) aufweist, wobei der Rücklaufkanal (7, 28) mit seinen beiden Enden an die beiden Enden des Lastkanals (8) angeschlossen ist, wobei die Außenumlenkung (6, 24) als mehrteiliges Umlenkelement (15, 25) ausgeführt ist mit einer Teilungsebene (T) entlang und innerhalb des Rücklaufkanals (7, 28).

4. Kugelgewindetrieb nach Anspruch 3, bei dem ein Umlenkteil (26) der mehrteiligen Außenumlenkung (24) einstückig mit dem Antriebsrad ausgebildet ist.

5. Kugelgewindetrieb nach Anspruch 3, bei dem die Außenumlenkung (6) als vom Zahnriemenrad (9) getrenntes Umlenkelement (15) vorzugsweise aus Kunststoff ausgeführt ist, wobei die Umlenkteile (16, 17) des Umlenkelementes (15) form-, kraft-, oder stoffschlüssig miteinander verbunden sind.

6. Kugelgewindetrieb nach Anspruch 5, bei dem das in dem Ringraum (12) angeordnete Umlenkelement (15) in eine Vergussmasse (20) eingebettet ist.

## Claims

1. Ball screw drive, having a spindle nut (2) which can be placed on a spindle (1) and on the inner circumference of which a ball groove (3) which is formed along a helical line delimits a loadbearing channel (8) for balls (5), an outer diversion means (6, 24) being provided which is arranged outside the spindle nut (2) and connects the two ends of the loadbearing channel (8) to one another endlessly, in order to divert the balls (5) from one end to the other end of the loadbearing channel (8), and a drive wheel being arranged on the spindle nut (2) for driving the spindle nut (2), the spindle nut (2) being mounted radially via a radial ball bearing (21) and the drive wheel being formed by a toothed-belt sprocket (9, 23) which has a toothed rim (11) which is provided with an external toothing system (10), **characterized in that** the outer diversion means (6, 24) is arranged at least substantially within the axial extent of the toothed-belt sprocket (9, 23), the toothed rim (11) of which delimits an annular space (12, 23a) which is formed within the toothed-belt sprocket (9) and in which the outer diversion means (6, 24) is arranged, the spindle nut (2) being provided with an integrally formed ball groove (22) of the radial ball bearing (21).

2. Ball screw drive according to Claim 1, in which the toothed-belt sprocket (9, 23) has a hub (13) which is arranged fixedly in terms of rotation on the spindle nut (2), the toothed rim (11) being connected fixedly to the hub (13) via a radial web (14) which is preferably arranged at one axial end of the gearwheel.

3. Ball screw drive according to Claim 1, in which the outer diversion means (6, 24) has a return channel (7, 28) for the balls (5), the return channel (7, 28) being connected with its two ends to the two ends of the loadbearing channel (8), the outer diversion means (6, 24) being configured as a multiple-piece diversion element (15, 25) having a separation plane (T) along and within the return channel (7, 28).

4. Ball screw drive according to Claim 3, in which a diversion part (26) of the multiple-piece outer diversion means (24) is configured in one piece with the drive wheel.

5. Ball screw drive according to Claim 3, in which the outer diversion means (6) is configured as a diversion element (15) which is separate from the toothed-belt sprocket (9) and is preferably made from plastic, the diversion parts (16, 17) of the diversion element (15) being connected to one another positively, non-positively or with a material-to-material fit.

6. Ball screw drive according to Claim 5, in which the diversion element (15) which is arranged in the annular space (12) is embedded in a sealing compound (20).

## Revendications

1. Vis d'entraînement à billes comportant un écrou d'arbre (2) pouvant être monté sur un arbre (1), à la périphérie intérieure duquel écrou (2) une gorge à billes (3) conformée le long d'une ligne d'hélice délimite un canal de charge (8) destiné à des billes (5), un renvoi extérieur (6, 24) disposé à l'extérieur de l'écrou d'arbre (2), lequel renvoi (6, 24) relie les deux extrémités du canal de charge (8) de façon continue l'une à l'autre afin de renvoyer les billes (5) d'une extrémité du canal de charge (8) à l'autre extrémité de celui-ci, étant prévu, et une roue d'entraînement étant disposée sur l'écrou d'arbre (2) afin d'entraîner l'écrou d'arbre (2), l'écrou d'arbre (2) étant logé radialement par l'intermédiaire d'un roulement à billes radial (21) et la roue d'entraînement étant formée par une roue de courroie dentée (9, 23), laquelle roue (9, 23) présente une couronne dentée (11) pourvue d'une denture extérieure (10), **caractérisée en ce que** le renvoi extérieur (6, 24) est disposé au moins substantiellement à l'intérieur de l'étendue axiale de la roue de courroie dentée (9, 23), dont la couronne dentée (11) délimite une chambre annulaire (12, 23a) conformée à l'intérieur de la roue de courroie dentée (9), dans laquelle chambre annulaire (12, 23a) le renvoi extérieur (6, 24) est disposé, l'écrou d'arbre (2) étant pourvu d'une gorge à billes (22) du roulement à billes radial (21) formée d'une seule pièce.

2. vis d'entraînement à billes selon la revendication 1, **caractérisée en ce que** la roue de courroie dentée (9, 23) présente un moyeu (13) disposé de façon rigide en rotation sur l'écrou d'arbre (2), la couronne dentée (11) étant reliée de façon rigide au moyeu (13) par l'intermédiaire d'une âme radiale (14) disposée de préférence à une extrémité axiale de la roue dentée.

3. Vis d'entraînement à billes selon la revendication 1, **caractérisée en ce que** le renvoi extérieur (6, 24) présente un canal de retour (7, 28) destiné aux billes (5), le canal de retour (7, 28) étant raccordé à ses deux extrémités aux deux extrémités du canal de charge (8), le renvoi extérieur (6, 24) étant réalisé en tant qu'élément de renvoi (15, 25) en plusieurs parties avec un plan de séparation (T) le long et à l'intérieur du canal de retour (7, 28).

4. Vis d'entraînement à billes selon la revendication 3, **caractérisée en ce qu'**une partie de renvoi (26) du renvoi extérieur (24) en plusieurs parties est conformée d'une seule pièce avec la roue d'entraînement.

5. Vis d'entraînement à billes selon la revendication 3, **caractérisée en ce que** le renvoi extérieur (6) est réalisé en tant qu'élément de renvoi (15) séparé de la roue de courroie dentée (9) de préférence en matière synthétique, les parties de renvoi (16, 17) de l'élément de renvoi (15) étant reliées l'une à l'autre par fermeture géométrique, par adhérence ou par scellement de matière.

6. vis d'entraînement à billes selon la revendication 5, **caractérisée en ce que** l'élément de renvoi (15) disposé dans la chambre annulaire (12) est noyé dans une masse de scellement (20).
